# EUROPÄISCHE PATENTSCHRIFT

(11) **EP 0 548 397 B1**
(45) Veröffentlichungstag und Bekanntmachung des Hinweises auf die Patenterteilung: **12.04.1995**
(21) Anmeldenummer: 91122142.2
(22) Anmeldetag: 23.12.1991
(51) Int. Cl.: B01D 29/11, B01D 29/72, B01D 29/90

(54) **yorrichtung zur Trennung von feststoffhaltigen Partikeln aus wässrigen Suspensionen**
Apparatus for the separation of particles containing solids from a water suspension
Dispositif pour la séparation de particules contenant des matières solides à partir de suspensions aqueuses

(43) Veröffentlichungstag der Anmeldung: 30.06.1993
(73) Patentinhaber: Winkler, Norbert, D-63699 Kefenrod (DE)
(72) Erfinder: Winkler, Norbert, D-63699 Kefenrod (DE)
(74) Vertreter: Müller-Wolff, Thomas, Dipl.-Ing.

(56) Entgegenhaltungen:
- CH-A- 363 641
- DE-A- 1 245 264
- DE-A- 2 708 135
- DE-A- 3 812 136
- DE-A- 3 835 326

## Beschreibung

Die Erfindung betrifft eine Vorrichtung zur Trennung von Feststoffpartikeln aus wässrigen Suspensionen durch Filtrierung bei fortlaufender Reinigung der Filterflächen, wobei die Suspension über einen Einlauf in einer Ebene senkrecht zur Schwerkraft in Rotation versetzt wird und sich unter Einwirkung der Schwerkraft ein Wasserschleier ausbildet, der über eine poröse, zylindrische Filterfläche 6,7 eines Separators 1 geleitet wird, an der entlang die wässrige Suspension mit den im rotierenden Wasserschleier sich anreichernden Feststoffpartikeln nach unten abläuft, während das gereinigte Wasser durch die poröse Filterfläche 6,7 hindurchtritt und von dort abgeleitet wird und wobei der Einlauf vor dem Separator 1 aus einem Einlaufstutzen 2 besteht, der im wesentlichen rohrförmig ausgebildet ist.

Eine Vorrichtung zur Trennung von Feststoffpartikeln aus wässrigen Suspensionen der eingangs genannten Art ist aus der DE-A-27 08 135 bekannt.

Für langsame Strömungsgeschwindigkeiten ist bei der bekannten Vorrichtung zusätzlich eine Vakuumschleuse vorgesehen, die in Verbindung mit einer Unterdruckquelle dafür sorgt, daß die aufgegebene Suspension im Separator eine geschlossene Schicht ausbildet. Hierzu ist die bekannte Vorrichtung vom Einlaufbereich bis zum Feststoffabzug vakuumdicht ausgeführt.

Gemäß der DE-A-38 12 136 ist ferner ein Verfahren zur Regenwassererfassung aus einem von der Dachrinne abgehenden Fallrohr bekannt, bei dem das Wasser über ein Deckelteil durch eine konische Siebeinrichtung und Regenwassertrenneinrichtung geleitet wird, wobei das Regenwasser aufgeteilt wird, und zwar in eine gereinigte Fraktion und in eine mit Schmutzteilen angereicherte Fraktion.

Die Aufteilung des Regenwassers in diese Fraktionen gelingt durch die Nutzung adhäsiver Trennkräfte, die den größten Teil des Wassers aus der Regenwassertrenneinrichtung ableiten. Die Abtrennung geschieht in einer Vorrichtung, bestehend aus einem ganzflächig die Siebeinrichtung abdeckenden Streckmetallkörper, dessen Oberfläche durch Aufrauhen vergrößert ist. Regenwasserabflußrichtung und Filterdurchflußrichtung liegen dabei in einer Linie.

Das bekannte Verfahren nach DE-A-38 12 136 hat sich in der Praxis bewährt, jedoch ist es für die Einleitung von quer zur Durchfluß- und Filterrichtung ankommendem Regenwasser oder anderen Suspensionen ungeeignet. Die bekannte Vorrichtung konnte daher nur bei einem Teil der Regenwassererfassungseinrichtungen verwendet werden, die senkrecht von der Dachebene herabführen und bei denen noch ausreichend Platz ist, um die Auftrennung in eine senkrecht angeordnete Einrichtung durchzuführen.

Dies ist aber nicht in allen Fällen möglich, da es zunehmend schwierig wird, im äußeren Bereich von größeren Wohnanlagen eine senkrechte Ableitung des Regenwassers durchzuführen. Im übrigen gibt es zahlreiche Anwendungsmöglichkeiten, bei denen Schmutzwasser bzw. Feststoffe enthaltende Suspensionen aus einer horizontalen Leitung austreten. In all diesen Fällen ist eine zufriedenstellend arbeitende Trenneinrichtung bisher nicht bekanntgeworden.

Aufgabe der vorliegenden Erfindung ist es, die Nachteile der eingangs beschriebenen Vorrichtungen zur Regenwassererfassung bzw. Abtrennung von Feststoffpartikeln aus Suspensionen zu vermeiden und eine wirksame Trennung von Feststoffpartikeln aus horizontal eingeleiteten Suspensionen auch bei niedrigen Strömungsgeschwindigkeiten ohne Anwendung eines Vakuums zu ermöglichen.

Erfindungsgemäß wird diese Aufgabe mit den im Patentanspruch 1 angegebenen Merkmalen gelöst.

Dabei ist die Einhaltung folgender Maßnahmen wichtig:
1. Ausbildung einer in einer Ebene senkrecht zur Schwerkraft rotierenden Suspension.
2. Überführung der Rotationsenergie in eine strudelförmige Bewegung.
3. Vergrößerung der strudelförmigen Bewegung unter Einwirkung der Schwerkraft und Ausbildung eines Wasserschleiers.
4. Ableitung des Wasserschleiers nach unten parallel zu einer porösen, zylindrischen Filterfläche.
5. Ableitung der wässrigen Phase aus dem Wasserschleier durch die Poren des zylindrischen Filters und Anreicherung der feststoffhaltigen Phase.
6. Ausbildung eines Differenzdruckes zwischen den beide Seiten umfassenden Filterflächen, wobei durch zyklische Veränderungen an den Oberflächen Druckschwankungen auftreten, die zur Entfernung der den Filter sonst verstopfenden Partikel führen.

In Weiterbildung des erfindungsgemäßen Gedankens wird die horizontal einströmende Suspension bereits vorher in eine Drallströmung versetzt, wodurch eine noch intensivere Anpressung an die Seitenwände des Separators und nachfolgend der zylindrischen Filterfläche gelingt.

Die erfindungsgemäße Vorrichtung ist im wesentlichen durch folgende Merkmale gekennzeichnet:
1. Maßnahmen zur Ausbildung einer Drallströmung im Einlaufstutzen.
2. Maßnahmen zur Überführung einer rotierenden Suspension in einen strudelförmigen Partikelstrom. Dies geschieht durch einen schräg angeordneten Einlauftrichter mit einer schneckenförmigen Übergangszone.
3. Abtrennung des Feststoffes aus der Suspension in einer Trennzone, wobei die adhäsiven Trennkräfte in einer gegenüber der DE-A-38 12 136 veränderten Siebeinrichtung erzeugt werden.

Die Trennkräfte werden nunmehr durch Nutzung von Kapillareffekten aufgebracht, wobei die Siebeinrichtung vorzugsweise aus einem doppelt wirksamen Filterelement besteht, das eine verstärkte Ausbildung von Adhäsionskräften aufweist. Das Filterelement hat fein ausgebildete Kapillare, die den Siebkörper durchziehen und somit eine Feststofftrennung ermöglichen. Die erreichbare Teilchengröße liegt bei der erfindungsgemäßen Trenneinrichtung unterhalb von 50 »m.

Im folgenden wird die Erfindung anhand eines Ausführungsbeispieles näher erläutert.
- Fig. 1: zeigt einen Querschnitt durch den Auslauf eines erfindungsgemäßen Separators.
- Fig. 2: zeigt einen Teilquerschnitt durch einen Einlaufstutzen des erfindungsgemäßen Separators in Draufsicht.
- Fig. 3: zeigt zwei Querschnitte durch den Einlaufstutzen des erfindungsgemäßen Separators entlang den Schnittlinien A-A und B-B.
- Fig. 4,5: zeigen zwei Teilquerschnitte durch die poröse Oberfläche des erfindungsgemäßen Separators.

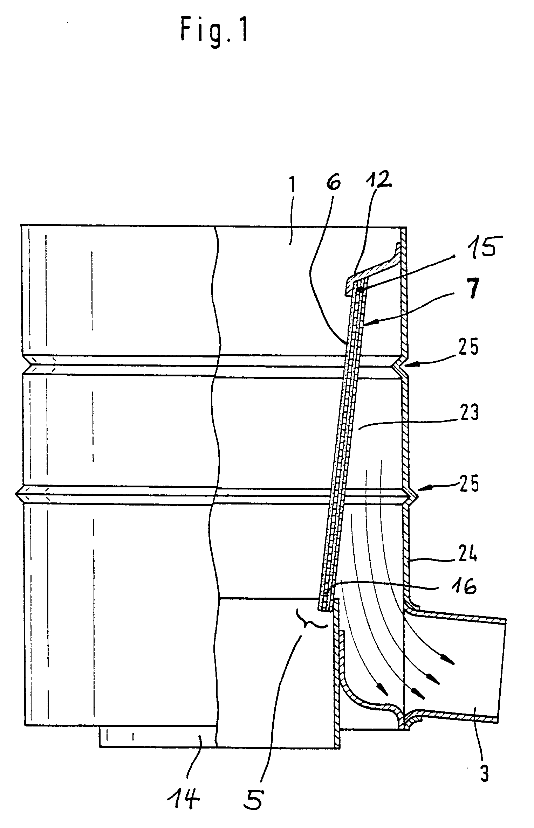

In Figur 1 ist ein Separator 1 mit einem Ablaufstutzen 3 dargestellt. Im Inneren befindet sich ein Filterelement 5, das eine glatte Filteraußenfläche 6 und eine aufgerauhte Filterinnenfläche 7 aufweist.

Leitbleche sorgen dafür, daß die über den Einlaufstutzen 2 ankommende Strömung, die vorzugsweise als Drallströmung ausgebildet ist, aus einer radial/tangentialen Einleitung zu einer überwiegend tangentialen Strömung umgeformt wird, die sich als Rotationsströmung an die Innenseite der Mantellinie anlegt. Die in Rotation versetzte Suspension wird also über die Leitbleche an die Mantellinie angedrückt und bildet damit einen Stromfaden aus, der unter Einwirkung der Schwerkraft weiter unten in einen Wasserschleier übergeht.

Die Strömungsgeschwindigkeit der Suspension wird noch weiter durch den Einlauftrichter 12 erhöht, der die Überleitung zum Filterelement 5 bildet. In diesem Abschnitt des erfindungsgemäßen Separators wird die in Rotationsströmung versetzte Suspension als Wasserschleier über die eigentliche Trennfläche geleitet, die aus einer glatten, innenliegenden Filterfläche 6 und einer rauhen außenliegenden Filterfläche 7 besteht.

Im Filterelement 5 werden die Feststoffe aus der Suspension bis zu einer Größe von 100 »m herausgefiltert. Dies geschieht dadurch, daß die in Rotation versetzte Suspension unter Einwirkung der Umfangsgeschwindigkeit gegen glatte, feinporige Filterflächen 6 gedrückt wird, wobei alle Partikel mit einem Durchmesser von > 100 » zurückgehalten werden, während die gereinigte Lösung auf der rauhen Filterfläche 7 nach unten abläuft. Beim Ablaufen über die rauhe Filterfläche 7 werden die Porenkanäle abwechselnd geöffnet und geschlossen, so daß in Verbindung mit dem von der glatten Filterfläche 6 her wirkenden Druck eine Pulsationswirkung entsteht. Diese Druckschwankung bewirkt, daß evtl. auf der glatten Filterfläche 6 anhaftende Feststoffpartikel abgelöst und nach unten aus dem Separator 1 entfernt werden.

Die gereinigte Lösung wird aus dem Separator über den Auslaufstutzen 3 abgeleitet. Die aufkonzentrierte, feststoffhaltige Suspension wird über den Hauptkanal 14 entsorgt, wobei ggf. eine Weiterbehandlung der Suspension durch nachgeschaltete Trennstufen erfolgt, die nach dem erfindungsgemäßen Verfahren arbeiten.

Wie in Figur 1 angedeutet, besteht das Filterelement 5 aus einem kegelförmigen Rohr, wobei an der Eingangsseite ein Kegelstumpf 15 und an der Ausgangsseite eine Kegelspitze 16 angeordnet ist.

Für das erfindungsgemäße Verfahren ist es wesentlich, daß sich der aus der rotierenden Suspension bildende Wasserschleier möglichst lange innerhalb des Filters aufrecht hält. Neben einer konischen Ausbildung des Filterelementes können hierzu noch weitere Maßnahmen beitragen, die im folgenden vorgestellt werden:
1. Die glatte Filterinnenseite 6 muß möglichst frei von anhaftenden Partikeln gehalten werden. Dies wird durch die bereits erwähnte pulsierende Strömung über die rauhe Filterfläche 7 erreicht.
2. Durch Ableitung der gereinigten Lösung entsteht ein Unterdruck im Mantelraum 23 zwischen Filterelement und Separatoraußenwand 24. Durch diesen Unterdruck wird der Wasserschleier durch die Poren angesaugt und bleibt an der glatten Seite der Filterfläche 6 anliegend erhalten.
3. Ein- bzw. Ausbuchtungen 25 an der Separatoraußenwand 24 bewirken eine Volumenveränderung und damit eine Druckschwankung, die zusätzlich einen pulsierenden Effekt auf die evtl. auf der glatten Innenseite der Filterfläche 6 anhaftenden ausübt. Diese Maßnahmen unterstützen einzeln und in Kombination die Aufrechterhaltung des Wasserschleiers.

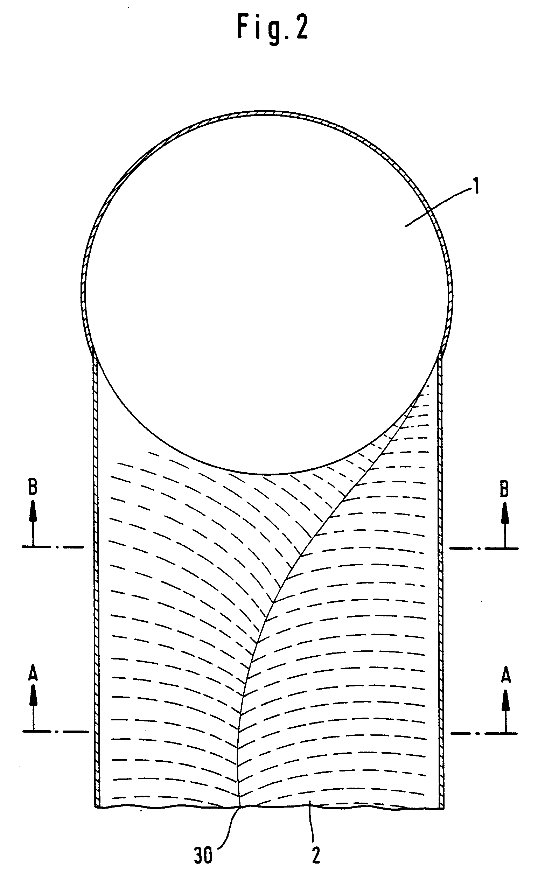

Erfindungsgemäß kann die Drallströmung in dem Einlaßstutzen 2 durch eine Vertiefung in Form einer Rinne 30 erzeugt werden. In Figur 2 ist hierzu ein Querschnitt durch den Separator 1 in Höhe des Einlaßstutzens 2 in prinzipieller Form dargestellt, wobei die Rinne 30 im Strömungsverlauf aus der Mittelachse des Einlaßstutzens 2 bis an den Innenrand der Einlaßzone geführt wird. Das bei A-A einfließende Regenwasser wird somit durch eine drallförmige Strömung an den Rand des Separators 1 geführt.

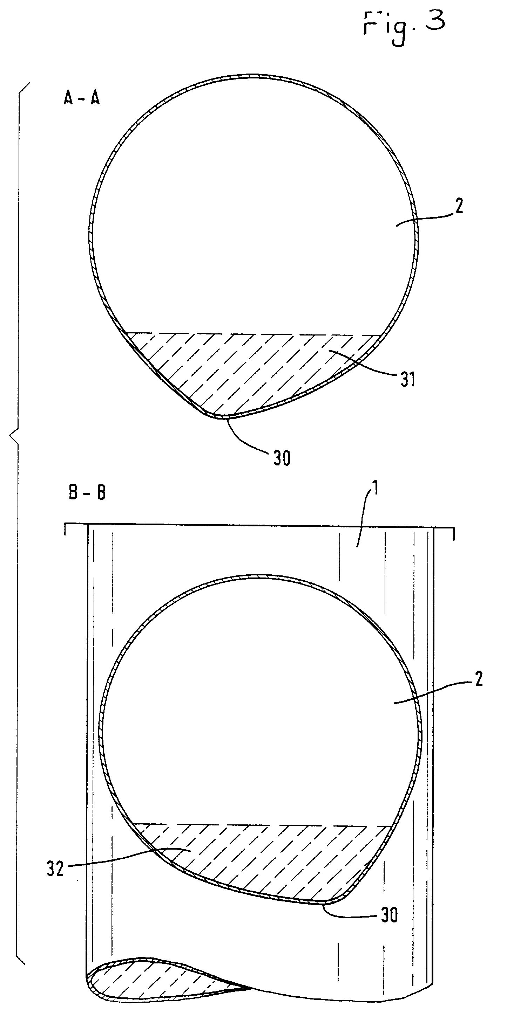

In den Figuren 2 und 3 sind Querschnitte durch den Einlaßstutzen 2 in Höhe der Schnittlinien A-A und B-B dargestellt. Man erkennt den äußeren Umfang des Einlaßstutzens 2, der am Rohrboden 31 einen unsymmetrischen Querschnitt in Form einer Strömungsrinne aufweist. Im Vergleich zum Schnitt B-B verlagert sich die Strömungsrinne durch Veränderung des Rohrbodens 32, so daß das einfließende Regenwasser vom linken Bildrand in den rechten Bildrand geführt wird.

Zur Erhöhung der Sogwirkung des Filterelementes 5 können zwei Schichten oder mehrere Schichten des erfindungsgemäß ausgebildeten Filterelementes ineinandergesetzt werden. Dies bedeutet, daß das durch das eine Filterelement hindurchfließende Wasser auf der Austrittsseite in ein neues Filterelement eintritt und dort, wiederum aufgrund der Adhäsionsbindung, abgelenkt wird. Die mehrfache Hintereinanderschaltung von Filterelementen ermöglicht so eine deutliche Vergrößerung des Ablenkungswinkels und verbessert somit die Filterwirkung.

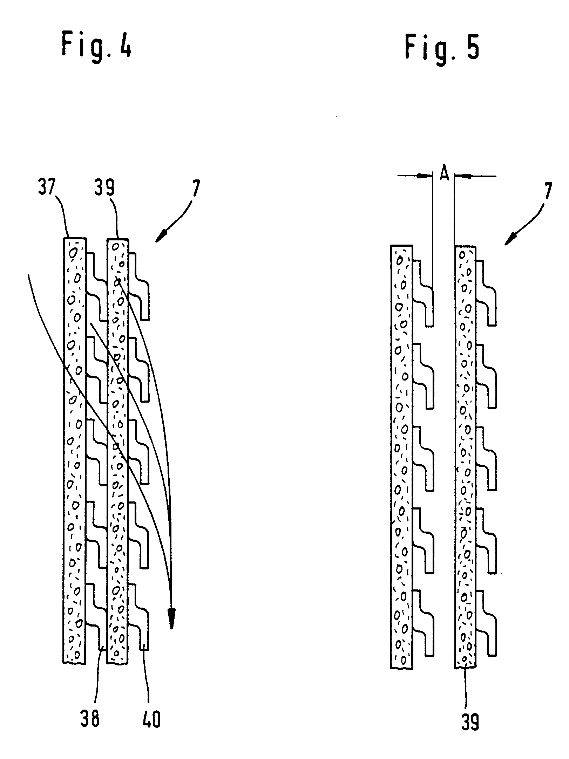

Der Vorgang ist in Figur 4 und Figur 5 ausführlich dargestellt.

Das aus dem Separator 1 austretende Wasser gelangt über eine poröse Filterschicht 37 zwischen die Noppen 38 und von dort wiederum in eine zweite poröse Schicht 39 zwischen die Noppen 40. Bei einer Vergrößerung des Abstandes A zwischen den Noppen 38 und der zweiten porösen Filterschicht 39 auf 1 bis 2 mm verbessert sich die Sogwirkung bzw. die Adhäsionskräfte zwischen den Filterelementen. Dadurch wird die Filterwirkung noch verstärkt.

## Patentansprüche

1. Vorrichtung zur Trennung von Feststoffpartikeln aus wässrigen Suspensionen durch Filtrierung bei fortlaufender Reinigung der Filterflächen, wobei die Suspension über einen Einlauf in einer Ebene senkrecht zur Schwerkraft in Rotation versetzt wird und sich unter Einwirkung der Schwerkraft ein Wasserschleier ausbildet, der über eine poröse, zylindrische Filterfläche (6,7) eines Separators (1) geleitet wird, an der entlang die wässrige Suspension mit den im rotierenden Wasserschleier sich anreichernden Feststoffpartikeln nach unten abläuft, während das gereinigte Wasser durch die poröse Filterfläche (6,7) hindurchtritt und von dort abgeleitet wird und wobei der Einlauf vor dem Separator (1) aus einem Einlaufstutzen (2) besteht, der im wesentlichen rohrförmig ausgebildet ist,
dadurch gekennzeichent,
daß der Einlaufstutzen (2) am unteren, dem Auslaufende des Separators (1) zugewandten Rohrboden eine Rinne (30) aufweist, die von der Mittelachse des Einlaufstutzens (2) ausgehend in Strömungsrichtung bis an den äußeren Rand der Schnittstelle zwischen Einlaufstutzen (2) und Separator (1) verläuft wobei am Übergang zwischen Einlaufstutzen (2) und Separator (1) ein sich verengender Trichter (20) angeordnet ist und
daß die mit Poren oder Öffnungen (13) versehene Filterfläche (6,7) an der der Suspension abgewandten Seite rauh und an der der Suspension zugewandten Seite glatt ausgebildet ist.

2. Vorrichtung nach Anspruch 1,
dadurch gekennzeichnet,
daß die Filterfläche (7) aus einer der Suspension direkt zugewandten, porösen Oberfläche (37) mit fein ausgebildeten Kapillaren besteht, auf deren Rückseite noppenförmige Erhebungen (38) oder Abkantungen in Strömungsrichtung angeordnet sind.

3. Vorrichtung nach einem der vorhergehenden Ansprüche,
dadurch gekennzeichnet,
daß in Kontakt mit den noppenförmigen Erhebungen (38) eine zweite poröse Einlage (39) steht, die wiederum auf der abgewandten Seite noppenförmige zweite Erhebungen (50) aufweist.

## Claims

1. A device for separating solids-bearing particles from aqueous suspensions by filtering while continuously cleaning the filter faces, with the suspension, by means of an inlet, being made to rotate in a plane which extends perpendicularly to gravity and with a water curtain being formed under the influence of gravity, which water curtain is guided over a porous cylindrical filter face (6, 7) of a separator (1), along which the aqueous suspension together with the solids-bearing particles accumulating in the rotating water curtain is drained off downwardly, whereas the purified water passes through the porous filter face (6, 7) from where it is discharged, and with the inlet in front of the separator (1) consisting of an inlet sleeve (2) which is substantially tubular in shape,
characterised in
that the inlet sleeve (2), at the lower tube base facing the outlet end of the separator (1), comprises a channel (30) which starts from the central axis of the inlet sleeve (2) and extends in the direction of flow as far as the outer edge of the interface between the inlet sleeve (2) and the separator (1), with a narrowing funnel (20) being arranged at the transition between the inlet sleeve (2) and the separator (1); and that the filter face (6, 7) provided with pores or apertures (13) comprises a rough finish on the side facing away from the suspension and a smooth finish on the side facing the suspension.

2. A device according to claim 1,
characterised in
that the filter face (7) consists of a porous surface (37) with fine capillaries which directly faces the suspension and whose reverse side is provided with nap-shaped raised portions (38) or bevelled portions arranged in the direction of flow.

3. A device according to any one of the preceding claims,
characterised in
that there is provided a second porous insert (39) which is in contact with the nap-shaped raised portions (38) and which, in turn, on the side facing away, comprises nap-shaped second raised portions (50).

## Revendications

1. Dispositif pour séparer de suspensions aqueuses des particules de matières solides par filtration avec nettoyage en continu des faces filtrantes, la suspension étant, au moyen d'un organe d'admission, mise en rotation dans un plan perpendiculaire à la force centrifuge et un rideau d'eau se formant sous l'action de la force centrifuge, qui est dirigé sur une face filtrante poreuse cylindrique (6, 7) d'un séparateur (1), le long de laquelle la suspension aqueuse s'écoule vers le bas avec les particules de matières solides s'enrichissant dans le rideau d'eau rotatif, tandis que l'eau épurée traverse la face filtrante poreuse (6, 7) puis est évacuée, et l'organe d'admission précédant le séparateur (1) étant constitué d'un piquage d'admission (2) qui est réalisé essentiellement tubulaire, **caractérisé** en ce que le piquage d'admission (2) présente, sur le fond intérieur du tube qui est tourné vers l'extrémité d'évacuation du séparateur (1), une rigole (30) qui s'étend dans la direction d'écoulement depuis l'axe médian du piquage d'admission (2) jusqu'au bord extérieur du point de jonction entre le piquage d'admission (2) et le séparateur (1), un entonnoir (12) allant en se rétrécissant étant disposé à la transition entre le piquage d'admission (2) et le séparateur (1), et en ce que la face filtrante (6, 7) pourvue de pores ou d'ouvertures (13) est réalisée rugueuse sur le côté opposé à la suspension et lisse sur le côté tourné vers la suspension.

2. Dispositif selon la revendication 1, **caractérisé** en ce que la face filtrante (7) est constituée d'une surface poreuse (37) à capillaires fins, directement tournée vers la suspension et sur le dos de laquelle sont disposés, dans la direction d'écoulement, des bossages (38) en forme de nopes ou des arêtes vives.

3. Dispositif selon l'une des revendications précédentes, **caractérisé** en ce qu'une deuxième couche poreuse (39) est en contact avec les bossages (38) en forme de nopes et présente elle-même, sur le côté opposé, des deuxièmes bossages (40) en forme de nopes.
